# EUROPEAN PATENT SPECIFICATION

(11) **EP 1 764 256 B1**
(45) Date of publication and mention of the grant of the patent: **26.08.2015**
(21) Application number: 06018745.7
(22) Date of filing: 07.09.2006
(51) Int. Cl.: B60L 7/10

(54) **Energy regenerating device for recovering kinetic energy in motor vehicles**
Energierückgewinnungsvorrichtung zur Energierückgewinnung von kinetischer Energie in Kraftfahrzeugen
Dispositif de régénération d'énergie pour récupérer l'énergie cinétique des véhicules automobiles

(30) Priority: 20.09.2005 IT TO20050642
(43) Date of publication of application: 21.03.2007
(73) Proprietor: Ippolito, Massimo, 14020 Berzano Di San Pietro AT (IT)
(72) Inventor: Ippolito, Massimo, 14020 Berzano Di San Pietro AT (IT)
(74) Representative: Garavelli, Paolo

(56) References cited:
- IT-A1- TO20 030 744
- US-A- 5 038 728
- US-A- 5 080 059

## Description

The present invention refers to an energy regenerating device for recovering kinetic energy in motor vehicles, in particular buses and other vehicles for urban service.

As known, the motor vehicle alternator is an electric energy generator that transforms part of the mechanical energy taken by the rotation of the endothermic engine. The electric energy in vehicles is supplied by the alternator, by taking mechanical power from the endothermal engine. The intensity of current produced by the alternator balances the electric absorptions and recharges the vehicle battery. Nowadays, the frequent use of turned-on lights also during the day and the now usual high traffic density (with consequent elongation of average travelling times and slowed runs also on speedy routes) make the alternator require further engine power, with a high increase of fuel consumptions. The alternator however has a typical 50% efficiency that places it among the less efficient of electric generators. The relevant energies are therefore high, since it can be assumed that 1.5 CV are subtracted from cars and up to 10 CV are subtracted from an urban bus engine. In spite of this, the alternator is retroactive since it is able to wholly suspend the mechanical load absorption when there is no electric request (for example in situations in which the battery is completely charged or with turned-off lights and users). Such retroactivity is provided by the alternator voltage regulator, that is optimised for keeping the charge status of the accumulators and for supplying energy to on-board electric users.

In particular, urban buses and collective transport means on tires in general have a permanent electric load (internal lights, headlights, fans, luminous displays, ...) that results in a continuous absorption of mechanical power. The alternator, in fact, absorbs useful energy for traction, while the energy dissipated when braking is definitely lost into heat from disks and drums. Urban buses, with their continuous and sudden accelerating and braking steps, are therefore the ideal field of application for a system able to regenerate kinetic energy dissipated when braking.

The prior art already provides for some arrangements aimed to recover motor vehicle kinetic energy. For example, US-A-5038728 and US-A-5080059 describe a method for managing the mechanical load of the alternator on the vehicle engine, however proposing historically old solutions that de facto resulted not able to be applied due to their extreme complexity and their excessively high costs.

In order to solve the prior art problems, in Italian Patent Application n. T02003A00744, the Applicant proposed a new energy regenerating device for alternators equipped with accelerometers for detecting the accelerating and braking steps of a motor vehicle; such device, though solving the prior art problems, was also subjected to some inconveniences, the most relevant of which being that it had to be integrated with the alternator, thereby resulting still scarcely practical and requiring anyway a careful assembly of the alternator itself.

Therefore, object of the present invention is solving the above prior art problems by providing an energy regenerating device for recovering kinetic energy in motor vehicles, in particular buses and other vehicles for urban service, that is independent and external to the alternator and that can be easily and quickly installed on any motor vehicle.

The above and other objects and advantages of the invention, as will appear from the following description, are reached with an energy regenerating device for recovering kinetic energy in motor vehicles, in particular buses and other vehicles for urban service, as claimed in claim 1. Preferred embodiments and non-trivial variations of the present invention are the subject matter of the dependent claims.

The present invention will be better described by some preferred embodiments thereof, provided as a nonlimiting example, with reference to the enclosed drawings, in which:
- FIG. 1 shows the block diagram of a motor vehicle alternator equipped with an embodiment of the energy regenerating device according to the invention; and
- FIG. 2a, 2b and 2c show three diagrams representing the expected behaviour of a motor vehicle equipped with the energy regenerating device according to the present invention.

The objective of the device 1 according to the present invention is introducing a pseudo-hybrid vehicle operating mode, in which it is possible to perform a partial recovery of kinetic energy when braking, due to the easiness with which the electric generator can change its own mechanical load on the engine. The device according to the present invention is composed outside of a containing case 50 equipped with electric connecting means that advantageously allows it to be placed next to the accumulator 20 and electrically connected in parallel with the battery 30 poles with cables with an adequate section, and without requiring further arrangements.

The device 1, controlled by a microprocessor, is composed of a solid state power electronics, with an energy accumulation capacity and is autonomously sensitive to accelerations.

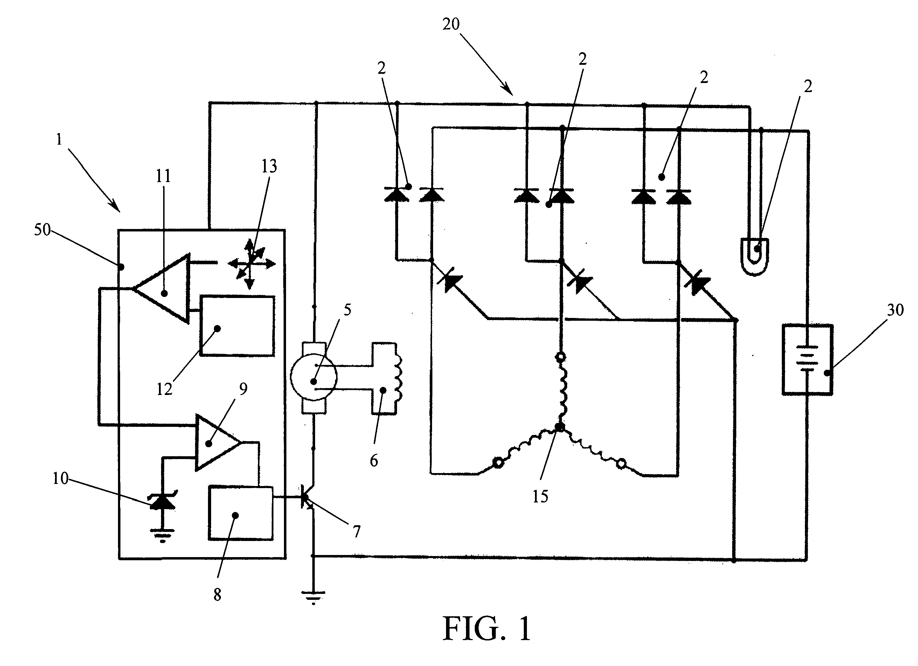

With reference to FIG. 1, it is possible to note the classical diagram of a motor vehicle alternator comprising:
- three-phase stator windings 15;
- rectifying diodes 2;
- minimum level warning light 3;
- battery of accumulators 30;
- rotor manifold 5;
- rotor winding 6;
- regulator power terminal 7;
- regulating and driver electronics 8;
- voltage reference 9.

Always with reference to FIG. 1, it is possible to note that the device 1 comprises:
- at least one acceleration sensor 13 with a pass-band that comprises the static acceleration in a single- or multi-axial configuration; the determination of acceleration or rise and braking or descent steps of the motor vehicle by the device 1 is given to a logic that uses acceleration sensors 13, preferably of the MEMS type, whose characteristics are:
   ▪ enough acceleration sensitivity;
   ▪ sensitivity to static accelerations (meant as gravity acceleration);
   ▪ operating temperature range of the automotive category;
- at least one first adder 10 of the accelerometric contribution to voltage reference;
- at least one long-term acceleration integrator 12 for providing the null acceleration reference; the signal conditioning for the acceleration sensor 13 can follow in time and automatically the null acceleration value, through long-term integrator comparison or with a signal branching: this allows regulating the device 1 operation also in case of different types of alternator assembling, or if securing variations occur, like in case of a compensation of the dragging belt length;
- at least one second adder 11 of the instantaneous acceleration measured with the null acceleration reference stored by the integrator 12;
- a battery of supercapacitors (not shown).

As previously realised, the device 1 according to the present invention is able to illude the alternator 20, by showing it, when necessary, a battery 30 charge level and a system voltage level that are different from real ones.

In particular during the vehicle braking step, the device 1 will absorb electric energy accumulating it inside in the battery of supercapacitors. The alternator 20, therefore, will see an insufficient voltage on the battery, increasing, as a consequence, the request of engine energy to compensate its lack, usefully increasing the engine-brake effect. This also translates in a braking system saving.

When accelerating, instead, the alternator 20 will see the completely charged battery and no electric users, since, contrarily to before, the device 1 delivers energy to on-board system and to battery 30. The alternator 20 will then suspend its activity till the voltage will be optimum, allowing to complete the acceleration step without subtracting useful power for traction to the engine. When the device 1 has ended its reserve, the motor vehicle will then be near to its following braking, and supercapacitors will again have the chance of accumulating energy for the next cycle.

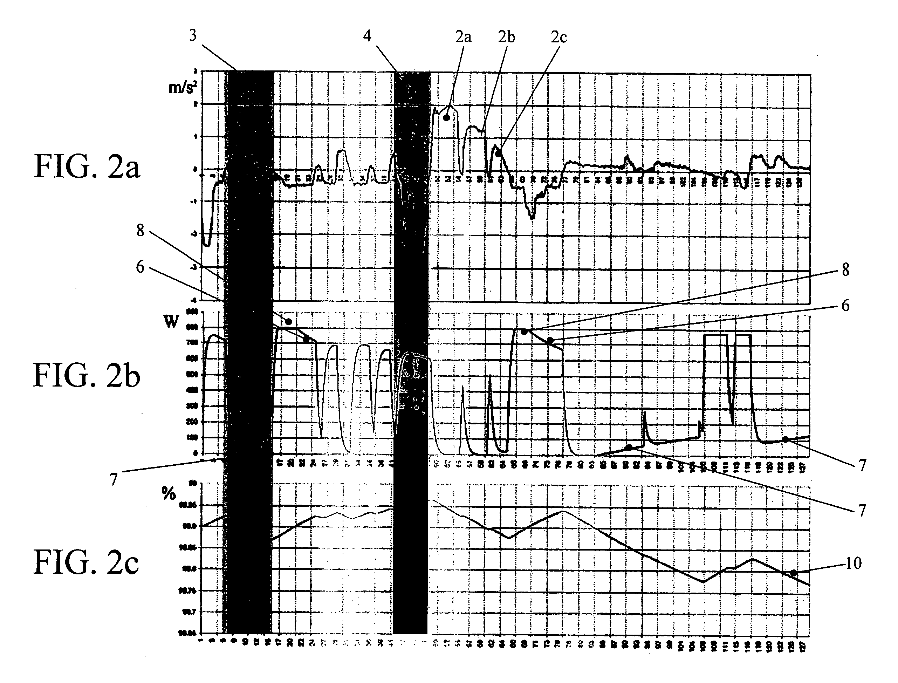

Due to what has been stated above, the diagram in FIG. 2a includes the real acquisition of an acceleration signal of a motor vehicle by the acceleration sensor 13 in approximately two minutes of motor vehicle running measured in metres per square second. Characteristic acceleration steps can be noted as the succession from the first gear 2a to the passage to the second gear 2b and then to the third gear 2c followed by a deceleration of about 10 seconds. Vertical bands point out the steps of accelerating 3 and slowing-down or braking 4 the motor vehicle and their consequences on alternator power diagrams - FIG. 2b - and battery charge status - FIG. 2c. The power diagram of the alternator included in FIG. 2b shows the check result by the device 1. When performing the measure, the motor vehicle system absorbed about 400W given by turned-on lights and venting: it can be noted that the power integral is approximately equal to the required power from the electric system. Among the wide current variations, specific operating characteristics of the device 1 can be recognised. In particular, the effect of the gradual return to rated alternator voltage can be read when the acceleration 7 remains; mirrorwise, the peak power tends to go back to its averagely absorbed value 6 due to the autonomous effect of the voltage regulator. The visible limitation to the power peak 8 vertex is the intrinsic characteristic of maximum power that can be delivered by the alternator 20.

The battery charge status diagram in FIG. 2c shows the computation of the percentage fluctuation band of accumulated energy and is included only within 0.2%: the energy debt 10 accumulated by the 30 at the end of the two minutes of this acquisition will be promptly given back by converting the inertial energy accumulated by the car.

It is therefore clear that the advantages of the device 1 according to the present invention are numerous; first of all, with respect to what is already known in the art, the device 1 is economically advantageous and can be immediately installed, this integration does not implying vehicle technical, standard and warranty problems. The device 1 is further ideal for retro-fitting motor vehicles.

Moreover, by using the device 1 on cars, it is possible to obtain a fuel saving of about 4% for cars in urban cycles; the application on an urban bus could, according to an average, reach 8% due to the exacerbated urban traffic summed to the high vehicle electric needs.

As known, in bit cities, thin powders are directly produced mainly by motor vehicle engines and brake wear. The increase of the engine-brake capability derived by using the device 1 could positively affect this by reducing the friction material wear for braking members.

Moreover, as known, lead batteries are characterised by a behavioural asymmetry in charge and discharge cycles. In fact, they can deliver high instantaneously discharged currents but cannot accept great recharge currents. When braking, when the alternator could deliver the maximum energy to complete the battery recharge, this latter one is not accepted. The device 1, in this case, accumulates the available energy excess by giving it back during the following steps, de facto greatly prolonging the optimum battery recharge time. This cannot but have a beneficial effect on total accumulator life.

Moreover, il device 1 according to the present invention allows obtaining a lower stress of the alternator energisation circuit. The energisation current in fact is an inverse function of the number of engine revolutions: thereby, withdrawing more energy during the engine brake step, when engine revolutions are high, brings about a further globally subtracted electric energy and a lower manifold wear.

All advantages of the present invention, some of which have been previously mentioned, would be similarly expressed for a bus supplied with natural gas or hydrogen.

## Claims

1. Motor vehicle equipped with:
- an alternator (20); and
- an energy regenerating regulator device (1) for recovering
kinetic energy, said energy regenerating regulator device (1)
comprising:
- at least one acceleration sensor (13) with a pass-band comprising a static acceleration in a single- or multi-axial configuration;
- at least one first adder (9) of an accelerometric contribution to a voltage reference (10);
- at least one long-term integrator (12) of an acceleration for providing a null acceleration reference;
- at least one second adder (11) of an instantaneous acceleration measured with said null acceleration reference stored in said integrator (12);
**characterised in that**:
- said energy regenerating regulator device (1) is independent from and external to said alternator (20) and is coupled with said alternator (20) in order to enable a recovery of kinetic energy;
and **in that** said energy regenerating device further comprises:
- a containing case (50) equipped with electric connecting means in parallel with poles of a battery (30) of said motor vehicle; and
- a battery of supercapacitors.

2. Motor vehicle according to claim 1, **characterised in that** said acceleration sensor is of a MEMS type.

3. Motor vehicle according to claim 1, **characterised in that**, in an acceleration step of said motor vehicle, said device (1) is adapted to deliver electric energy to an on-board system of said motor vehicle and to said battery (30).

## Patentansprüche

1. Fahrzeug, das mit:
- einem Drehstromgenerator (20) ausgestattet ist; und
- einer Einstellvorrichtung (1) zur Energierückgewinnung für die Rückgewinnung der kinetischen Energie, die genannte Einstellvorrichtung (1) zur Energierückgewinnung schließt folgendes ein:
- Mindestens einen Beschleunigungssensor (13) mit einer Bandbreite, die eine statische Beschleunigung in einer ein- oder mehrachsigen Konfiguration einschließt;
- Mindestens einen ersten Addierer (9) eines Beschleunigungsbeitrages für einen Spannungsbezug (10);
- Mindestens einen Langzeitintegrator (12) einer Beschleunigung, um einen Beschleunigungsbeitrag Null zu liefern;
- Mindestens einen zweiten Addierer (11) einer Momentanbeschleunigung, die mit dem genannten Beschleunigungsbezug Null gemessen wird, welche im genannten Integrator (12) gespeichert wurde;
und ist **dadurch gekennzeichnet, dass**:
- Die genannte Einstellvorrichtung (1) der Energierückgewinnung unabhängig vom und extern vom genannten Drehstromgenerator (20) ist, und mit dem genannten Drehstromgenerator (20) verbunden ist, um eine Rückgewinnung der kinetischen Energie zu ermöglichen:
und **dadurch gekennzeichnet ist, dass** die genannte Vorrichtung der Energierückgewinnung außerdem folgendes einschließt:
- Ein Aufnahmegehäuse (50), das mit parallel geschalteten Anschlusselementen mit den Polen einer Batterie (30) des genannten Fahrzeugs ausgestattet ist; und
- Eine Superkondensatorbatterie.

2. Fahrzeug gemäß Patentanspruch 1, das **dadurch gekennzeichnet ist, dass** der besagte Beschleunigungssensor ein MEMS-Sensor ist.

3. Fahrzeug gemäß Patentanspruch 1, das **dadurch gekennzeichnet ist, dass** die genannte Vorrichtung (1) in einer Beschleunigungsphase des genannten Fahrzeugs dazu dient, elektrische Energie an eine Bordanlage des genannten Fahrzeugs und die genannte Batterie 30 abzugeben.

## Revendications

1. Véhicule automobile doté de :
- un alternateur (20) ; et
- un dispositif de réglage (1) de la régénération énergétique pour la récupération d'énergie cinétique comprenant :
- au moins un capteur d'accélération (13) avec une bande passante prévoyant une accélération statique en configuration mono ou pluri-axiale ;
- au moins un premier additionneur (9) d'un apport accélérométrique à une référence de tension (10) ;
- au moins un intégrateur à long terme (12) d'accélération pour fournir une référence d'accélération nulle ;
- au moins un second additionneur (11) d'accélération instantanée mesurée avec la référence d'accélération nulle mémorisée sur l'intégrateur (12) ;
**caractérisé en ce que** :
- le dispositif de réglage (1) de la régénération énergétique est indépendant et extérieur par rapport à l'alternateur (20) auquel il est accouplé pour permettre la récupération d'énergie cinétique :
et **en ce que** le dispositif de régénération énergétique comprend aussi :
- un boîtier (50) doté des moyens de branchement électrique en parallèle aux pôles d'une batterie (30) du véhicule automobile ; et
- un groupe de supercondensateurs.

2. Véhicule automobile, selon la revendication 1, **caractérisé en ce que** le capteur d'accélération est de type MEMS.

3. Véhicule automobile, selon la revendication 1, **caractérisé en ce que**, dans une phase d'accélération du véhicule automobile, le dispositif (1) est en mesure de distribuer l'énergie électrique à un système embarqué et à la batterie (30).
